# EUROPEAN PATENT APPLICATION

(11) **EP 4 193 958 A1**
(43) Date of publication of application: **14.06.2023**
(21) Application number: 22169807.9
(22) Date of filing: 25.04.2022
(51) Int. Cl.: A61C 7/00

(54) **DENTAL ORTHODONTIC ACCELERATOR**

(30) Priority: 13.12.2021 CN 202111517895
(71) Applicant: Nanjing Star Medical Equipment Co., Ltd., Economic Development Zone, Gaochun District Nanjing City Jiangsu 211300 (CN)
(72) Inventor: CHEN, Xinzheng, Nanjing City, Jiangsu Province (CN)
(74) Representative: Ipside

(57) **Abstract**

The present invention relates to the field of medical devices, in particular to a dental orthodontic accelerator that has a simple structure and can improve the orthodontic speed. Related electronic devices are arranged in the left part of the mounting rack, and a polarizing motor is arranged in the right part. These electronic devices comprise rechargeable battery, PCB and mechanically controlled switch from top to bottom. The mechanically controlled switch comes into contact with the housing. The dental orthodontic accelerator of the present invention achieves the coordination among housing, mounting rack, polarizing motor, rechargeable battery, PCB and mechanically controlled switch. During the operation, user presses the mechanically controlled switch, turns on the polarizing motor for vibration, bites the housing for mastication or occlusion, which will produce masticatory or occlusal force; meanwhile, the vibration produced by the polarizing motor stimulates the activity of bone cells so that the blood flow is quickened and the orthodontic treatment is accelerated. The dental orthodontic accelerator features a simple structure and accelerated orthodontic treatment.

## Description

### Technical Field

The present invention relates to the field of medical devices, in particular to a dental orthodontic accelerator that has a simple structure and can improve the orthodontic speed.

### Background of the Invention

Orthodontic treatment is mainly used to adjust the coordination between facial bones, teeth as well as maxillofacial nerves and muscles mainly through various orthodontic devices, namely adjusting the abnormal relations between maxilla and mandible, between upper and lower teeth, between teeth and jaw bones and between the nerves and muscles that connect them. The ultimate goal of orthodontic treatment is to make the stomatognathic system achieve balance, stability and beauty.

The orthodontic treatment of malocclusion mainly depends on wearing orthodontic appliances inside or outside the oral cavity. Dental defects are corrected through applying appropriate "biological forces" to teeth, alveolar bones and jaw bones for physiological movement.

The prior art adopts braces for powerful orthodontic treatment. However, this method generally needs a long duration, and braces will affect the beauty for a considerable period of time. Therefore, it is necessary to design an accelerator that can improve the orthodontic speed.

### Summary of the Invention

In view of the defects of the prior art, the invention provides a dental orthodontic accelerator that has a simple structure and can improve the orthodontic speed.

The invention adopts the following technical proposal. The dental orthodontic accelerator comprises a housing and a mounting rack arranged in the housing. Related electronic devices are arranged in the left part of the mounting rack, and a polarizing motor is arranged in the right part. The electronic devices comprise a rechargeable battery, a PCB and a mechanically controlled switch from top to bottom. The mechanically controlled switch comes into contact with the housing.

For better implementation of the invention, the PCB is provided with a wireless charging module. For better implementation of the invention, the PCB is provided with a Bluetooth module.

For better implementation of the invention, the housing is made of food-grade engineering plastics.

For better implementation of the invention, the housing is made of food-grade metallic material.

For better implementation of the invention, the housing comprises a stainless steel body, on the surface of which a food-grade encapsulation is arranged.

For better implementation of the invention, all the edges of the housing are designed to be smooth. For better implementation of the invention, the polarizing motor is of variable frequency.

For better implementation of the invention, the mounting rack is made of stainless steel. For better implementation of the invention, the overall shape of the housing is square.

The beneficial effects of the invention are reflected as follows: The dental orthodontic accelerator of the invention achieves the coordination among housing, mounting rack, polarizing motor, rechargeable battery, PCB and mechanically controlled switch. During the operation, user presses the mechanically controlled switch, turns on the polarizing motor for vibration, bites the housing for mastication or occlusion, which will produce masticatory or occlusal force; meanwhile, the vibration produced by the polarizing motor stimulates the activity of bone cells so that the blood flow is quickened and the orthodontic treatment is accelerated. The dental orthodontic accelerator features a simple structure and accelerated orthodontic treatment.

### Brief Description of the Drawings

In order to more clearly describe the embodiments of the invention or the technical proposal of the prior art, the following is a brief introduction of the drawings required for the description of the embodiments or prior art. In all the drawings, similar elements or parts are generally marked with similar reference signs. Various elements or parts are not necessarily drawn according to the actual scale in the drawings.
Figure 1 is an internal structure diagram of the dental orthodontic accelerator of the invention;
Figure 2 is an external structure diagram of the dental orthodontic accelerator of the invention;

Wherein, 1 - mounting rack, 2 - PCB, 3 - rechargeable battery, 4 - polarizing motor, 5 - mechanically controlled switch, 6 - housing.

### Detailed Description of Embodiments

The following is the detailed description of the embodiments of the technical proposal of the present invention in combination with the drawings. The following embodiments are only used to more clearly describe the technical proposal of the invention, and are only taken as examples; they shall not be used to limit the extent of protection of the invention.

It should be noted that, unless otherwise stated, the technical or scientific terms used in this application should have the ordinary meanings understood by those skilled in the art which the invention belongs to.

### Embodiment 1:

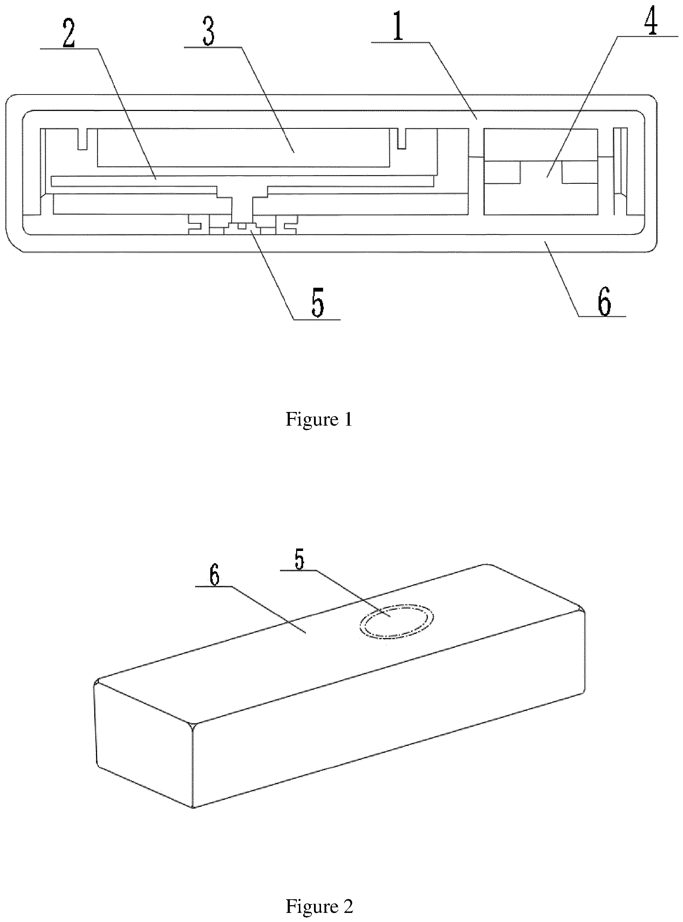

According to Figures 1 & 2, the dental orthodontic accelerator of the invention comprises a housing (6) and a mounting rack (1) arranged in the housing (6). Related electronic devices are arranged in the left part of the mounting rack (1), and a polarizing motor (4) is arranged in the right part. The electronic devices comprise a rechargeable battery (3), a PCB (2) and a mechanically controlled switch (5) from top to bottom. The mechanically controlled switch (5) comes into contact with the housing (6). The dental orthodontic accelerator of the invention achieves the coordination among housing (6), mounting rack (1), polarizing motor (4), rechargeable battery (3), PCB (2) and mechanically controlled switch (5). During the operation, user presses the mechanically controlled switch (5), turns on the polarizing motor (4) for vibration, bites the housing (6) for mastication or occlusion, which will produce masticatory or occlusal force; meanwhile, the vibration produced by the polarizing motor stimulates the activity of bone cells so that the blood flow is quickened and the orthodontic treatment is accelerated. The dental orthodontic accelerator features a simple structure and accelerated orthodontic treatment.

### Embodiment 2:

Based on the above embodiment, for further better implementation of the invention, the PCB (2) is provided with a wireless charging module. This design is convenient for charging, without need of opening the housing (6) and providing an external charging port, thus improving the sealing performance.

Preferably, the PCB (2) is provided with a Bluetooth module. This design achieves remote control through external remote controller, convenient to control the working of the polarizing motor (4). Additionally, a pressure sensor can also be provided as the switch to control the polarizing motor (4); during the occlusion of patient, when sensing any pressure change, the pressure sensor will activate the switching mechanism to control the polarizing motor (4).

Preferably, the housing (6) is made of food-grade engineering plastics.

Preferably, the housing (6) is made of food-grade metallic material.

Preferably, the housing (6) comprises a stainless steel body, on the surface of which a food-grade encapsulation is arranged.

### Embodiment 3:

Based on the above embodiment, for further better implementation of the invention, all the edges of the housing (6) are designed to be smooth. This design can prevent the housing (6) from damaging to the human oral cavity, thus improving the comfort of user.

Preferably, the polarizing motor (4) is of variable frequency.

Preferably, the mounting rack (1) is made of stainless steel.

Preferably, the overall shape of the housing (6) is square; the housing can be made into a shape similar to the size of chewing gum, convenient for occlusion.

Finally, it should be noted that the above embodiments are only used to describe the technical proposal of the invention and shall not be used to limit it. Although the invention is described in detail with reference to the above embodiments, a person of ordinary skill in the art should understand that modifications can still be made to the technical proposal recorded in the above embodiments or equivalent substitutions can be made for all or part of the technical features therein. Such modifications or substitutions should not make the corresponding technical proposals essentially depart from the scope of the technical proposal in the embodiments of the invention, and should be covered by the claims and specifications of the invention.

## Claims

1. A dental orthodontic accelerator, **characterized in that** it comprises a housing (6) and a mounting rack (1) arranged in the housing (6); related electronic devices are arranged in the left part of the mounting rack (1), and a polarizing motor (4) is arranged in the right part; the electronic devices comprise a rechargeable battery (3), a PCB (2) and a mechanically controlled switch (5) from top to bottom; the mechanically controlled switch (5) comes into contact with the housing (6).

2. The dental orthodontic accelerator according to Claim 1, **characterized in that** the PCB (2) is provided with a wireless charging module.

3. The dental orthodontic accelerator according to Claim 1, **characterized in that** the PCB (2) is provided with a Bluetooth module.

4. The dental orthodontic accelerator according to Claim 1, **characterized in that** the housing (6) is made of food-grade engineering plastics.

5. The dental orthodontic accelerator according to Claim 1, **characterized in that** the housing (6) is made of food-grade metallic material.

6. The dental orthodontic accelerator according to Claim 1, **characterized in that** the housing (6) comprises a stainless steel body, on the surface of which a food-grade encapsulation is arranged.

7. The dental orthodontic accelerator according to Claim 1, **characterized in that** all the edges of the housing (6) are designed to be smooth.

8. The dental orthodontic accelerator according to Claim 1, **characterized in that** the polarizing motor (4) is of variable frequency.

9. The dental orthodontic accelerator according to Claim 1, **characterized in that** the mounting rack (1) is made of stainless steel.

10. The dental orthodontic accelerator according to Claim 1, **characterized in that** the overall shape of the housing (6) is square.
